(19) Europäisches Patentamt
European Patent Office
Office européen des brevets

(11) Publication number: **0 121 575 B1**

(12) **EUROPEAN PATENT SPECIFICATION**

(45) Date of publication of patent specification: **27.05.87**

(51) Int. Cl.$^4$: **H 02 M 7/537,** H 02 P 5/34

(21) Application number: **83903397.4**

(22) Date of filing: **19.10.83**

(86) International application number:
**PCT/JP83/00364**

(87) International publication number:
**WO 84/01677 26.04.84 Gazette 84/11**

(54) **CONTROLLER FOR MOTOR.**

(30) Priority: **19.10.82 JP 183334/82**

(43) Date of publication of application:
**17.10.84 Bulletin 84/42**

(45) Publication of the grant of the patent:
**27.05.87 Bulletin 87/22**

(84) Designated Contracting States:
**DE FR GB**

(56) References cited:
**EP-A-0 085 541**
**DE-A-3 105 792**
**JP-A-57 142 184**
**JP-A-57 153 567**

(73) Proprietor: **FANUC LTD**
**3580, Shibokusa Aza-Komanba Oshino-mura**
**Minamitsuru-gun Yamanashi 401-05 (JP)**

(72) Inventor: **KURAKAKE, Mitsuo**
**Izumi-Haitsu 103 3-3-10, Tamadaira**
**Hino-shi Tokyo 191 (JP)**
Inventor: **SAKAMOTO, Keiji**
**Fuyou-Haitsu 102 65-4, Takakura-cho**
**Hachioji-shi Tokyo 192 (JP)**

(74) Representative: **Billington, Lawrence Emlyn et al**
**HASELTINE LAKE & CO Hazlitt House 28**
**Southampton Buildings Chancery Lane**
**London WC2A 1AT (GB)**

**EP 0 121 575 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a motor control apparatus and, more particularly, to a motor control apparatus capable of reducing or preventing an adverse effect caused by the dead zone of a pulse-width modulating circuit provided in order to prevent a short circuit in an inverter circuit.

A control circuit of an AC or DC motor generally makes use of an arrangement, namely a pulse-width modulation drive circuit, for pulse-width modulating an AC or DC current command to drive an inverter circuit (a transistorized amplifier circuit), whereby a pulse-width modulated sinusoidal or direct current is applied to a motor. With such a construction, it is sufficient if the arrangement is capable of withstanding the high voltage required solely by the final stage of the inverter circuit, the circuit construction is simple and control is performed comparatively well.

In the case of a direct current, the inverter circuit has four transistors. For three-phase AC drive, the inverter circuit has two transistors in each phase, for a total of six transistors, with control being such that when one of the transistors in each phase turns on, the other turns off. A transistor drive signal (a pulse-width modulated signal) is provided with dead time in such a manner that the two transistors in each phase will not be turned on simultaneously at the time of the changeover, that is, in such a manner that the DC power supply will not develop a short circuit. This dead time is set by providing a pulse-width modulating circuit with a dead zone. However, since the pulse-width modulated signal is provided with the dead time in this manner, the pulse width of the modulated signal is reduced and distortion is produced in the pulse-width modulated sinusoidal current or in the direct current. This results in certain disadvantages, namely greater excitation noise and torque irregularity, with the torque originally required not being obtained. In particular, in the case of operation at low speed, the sinusoidal current command takes on a low frequency, and pulse width is small with a direct current command of a low voltage. Accordingly, the influence of the dead zone is of such proportions as cannot be ignored.

EP—A—0085541 (relevant under Article 54(3) EPC) discloses a motor control apparatus having an arithmetic circuit for calculating a current command, a holding circuit for holding said current command, a pulse-width modulating circuit for pulse-width modulating an output signal from said holding circuit and provided with a dead zone with respect to said output signal, and an inverter for controlling a motor by said pulse-width modulated signal, wherein said arithmetic circuit has means for adding a compensating signal, which compensates for loss due to said dead zone, to said current command and for delivering the result to said holding circuit

As means for compensating for the dead zone there has been proposed in EP—A—0085541 a system in which the output voltage of the inverter circuit is fed back to a pre-stage of the pulse-width modulating circuit to raise the gain by feedback loops. However, with an arrangement in which an arithmetic circuit such as a microprocessor is used as the motor control circuit, it is necessary to separately provide analog circuits for these feedback loops. These analog circuits cannot be substituted by processing performed by the arithmetic circuit, thereby resulting in a complicated construction and high cost.

Accordingly, an object of the present invention is to provide a motor control circuit which is capable of compensating for the influence of a dead zone in a pulse-width modulating circuit by using an arithmetic circuit.

According to the present invention said arithmetic circuit includes a data memory storing a value of said compensating signal as a value dependent on the dead zone.

Where a PWM circuit having a dead zone, and an inverter, are provided for controlling a motor, the present invention is arranged in such a manner that an arithmetic circuit for generating a current command adds a compensating signal, which is capable of offsetting the dead zone of the PWM circuit, to the current command and of delivering the result to a holding circuit. Loss of motor torque due to the influence of the PWM circuit dead zone can thus be reduced or prevented, and the reduction or elimination of loss ascribable to the dead zone can be carried out by addition processing performed by the arithmetic circuit.

Brief description of the drawings

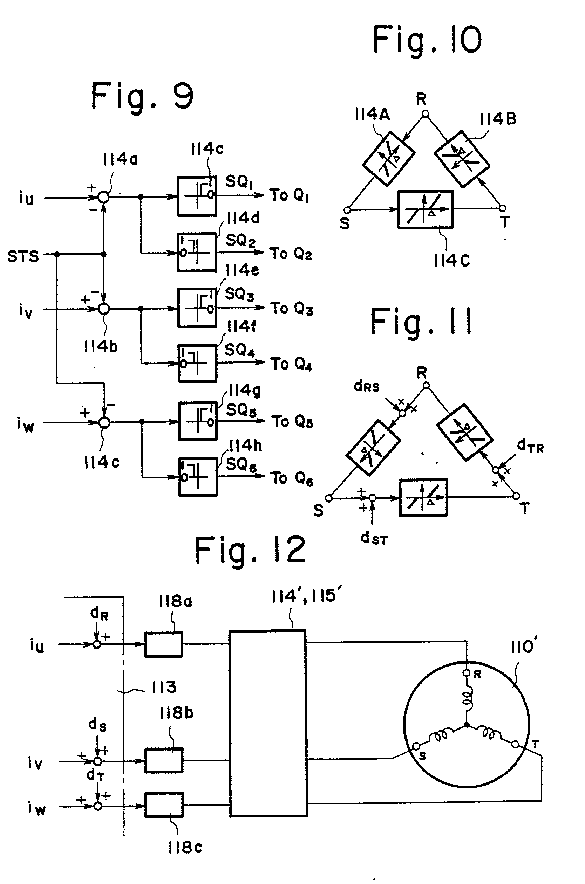

Fig. 1 is a block diagram of an embodiment of the present invention, Fig. 2 is a block diagram showing a principal portion of the arrangement of Fig. 1, Fig. 3 is a diagram of waveforms associated with various portions of the arrangement of Fig. 2, Fig. 4 is a view of an input/output characteristic of a PWM circuit, Fig. 5 is a block diagram for describing elimination of the effects of dead zone according to a previous proposal, Fig. 6 is a block diagram for describing the principle of dead zone effect reduction or elimination according to the present invention, Fig. 7 is a view of an input/output characteristic of a PWM circuit when utilising the present invention, Fig. 8 is a block diagram of another embodiment of the present invention, Fig. 9 is a block diagram of a principal portion of Fig. 8, and Figs. 10, 11 and 12 are block diagrams for describing the principle of the present invention as applied to Fig. 8.

The present invention will now be described in detail based on an exemplary embodiment thereof. Fig. 1 is a block diagram showing an embodiment of the present invention. In the Figure, numeral 110 denotes a DC motor, and numeral 111 denotes a tachogenerator for producing an actual velocity voltage TSA proportional to the rotational velocity of the motor 110. Numeral 112 denotes a current transformer for sensing the armature current Ic of the motor 110.

Numeral 113 denotes an arithmetic circuit constituted by a microprocessor and having a processor 113a for performing processing, a program memory 113b storing a motor control program executed by the processor 113a, a data memory 113c for storing data such as the results of processing, an input/output port 113d for administering an exchange of data with an external main control unit, an input/output port 113e for delivering a current command ic to a pulse-width modulating circuit (hereafter referred to as a PWM circuit), an input/output port 113f which receives an armature current Ic from the current transformer 112, an input/output port 113g which receives the actual velocity voltage TSA of the tachogenerator 111, and an address/data bus 113h interconnecting the foregoing units. Numeral 114 denotes the pulse-width modulating circuit, 115 a transistorized inverter, 116 a three-phase AC power supply, and 117 a rectifying circuit for rectifying the three-phase alternating current into direct current and having a diode group 117a and a capacitor 117b. As shown in the block diagram of Fig. 2, the pulse-width modulating circuit 114 has a subtracting circuit 114a for subtracting a sawtooth signal STS from the current command ic, an adding circuit 114b for adding the current command ic and the triangular signal STS together, and four comparator circuits 114c through 114f. The comparator circuits 114c, 114f generate "1" outputs if the respective input signals thereof are $+_{\Delta}$ or greater, and "0" outputs if their respective input signals are less than $+_{\Delta}$. The comparator circuits 114d, 114e produce "1" outputs if the respective input signals thereof are less than $-_{\Delta}$, and "0" outputs if their respective input signals are $-_{\Delta}$ or greater. Accordingly, when the current command ic and the triangular signal STS are related as shown by the waveform diagram of Fig. 3, the PWM circuit 114 operates to generate pulse-width modulated signals (hereafter referred to as PWM signals) SQ1, SQ2, SQ3, SQ4, which are the outputs of the respective comparator circuits 114c, 114d, 114e, 114f, as shown in Fig. 3. The width of the "1" level of each of the PWM waveforms SQ1, SQ2, SQ3, SQ4 is reduced by an amount equivalent to the shaded portions by the abovementioned dead zone of the respective comparator circuits 114c through 114f. Meanwhile, the transistorized inverter 115 includes a pair of serially connected transistors Q1, Q2, and a pair of transistors Q3, Q4 connected in parallel. Diodes D1 through D4 are provided for corresponding ones of the transistors Q1 through Q4. When transistors Q1, Q4 turn on, a current flows in the direction of the arrow A to rotate the motor 110 in the forward (or reverse) direction. When transistors Q2, Q3 turn on, a current flows in the direction of the arrow B to rotate the motor 110 in the reverse (or forward) direction. The PWM signals SQ1, SQ2, SQ3, SQ4 are applied to the bases of respective transistors Q1, Q2, Q3, Q4. Accordingly, the shaded portions of the PWM signals SQ1 through SQ4 are deleted by the dead zone $_{\Delta}$ of the PWM circuit 114 in such a manner that transistors Q1, Q2, as well as transistors Q3, Q4, will not turn on simultaneously to create a short circuit. The input/output signal characteristic of the PWM circuit 114 will therefore have a dead zone ranging between $_{\Delta}$ and $-_{\Delta}$, as shown in Fig. 4. Returning to Fig. 1, numeral 118 denotes a holding circuit for holding the current command ic, the output stage of the holding circuit including a digital-to-analog converter. Numerals 119, 120 denote analog-to-digital converters (A—D converters) for converting the analog values of the armature current Ic and actual velocity voltage TSA, respectively, into digital values.

The operation of the embodiment shown in Fig. 1 will now be described. Assume that a velocity command VCMD is elevated when the motor 110 is rotating at a certain velocity. The velocity command VCMD arrives at the input/output port 113d. The processor 113a reads the velocity command VCMD from the input/output port 113d via the bus 113h. Meanwhile, the processor 113a reads, at a predetermined period, the actual velocity TSA of the tachogenerator 111 via the input/output port 113g and the armature current Ic via the input/output port 113f, and produces the current command ic by performing predetermined arithmetic operations in accordance with the motor control program of the program memory 113b. Specifically, the processor 113a computes the difference between the velocity command VCMD and the actual velocity TSA to derive a velocity error ER (error calculation step), and performs a proportional integration operation in accordance with the following equation using the velocity error ER, thereby to calculate the amplitude Is of the armature current (proportional integration step):

$$\left.\begin{aligned} Is &= K1(Vc-Va)+K2\Sigma(Vc-Va) \\ \sum_{t_o}^{t_n}(Vc-Va) &= \sum_{t_o}^{t_{n-1}}(Vc-Va)+(Vc-Va)_{at\ tn} \end{aligned}\right\} \quad (1)$$

When the load fluctuates or the velocity command changes, therefore, the velocity error ER (=Vc−Va) grows larger. There is also a corresponding increase in the amplitude Is of the armature current. The larger Is becomes, the greater the torque generated, with the torque acting to bring the actual velocity of the motor into conformance with the commanded velocity.

Next, the processor 113a subtracts the read armature current Ic from the amplitude Is to calculate the current command ic (current command calculation step), and feeds the current command into the input/output port 113e via the bus line 113h. The current command ic from the input/output port 113e is delivered to the holding circuit 118 where it is held until the next current command ic is calculated.

The processor 113a executes the above-described calculations at a predetermined period and delivers the current command ic as an output periodically. The current command ic is sent to the PWM circuit 114 having the aforementioned dead zone, and is converted thereby into the PWM signals SQ1 through SQ4 for controlling the on/off action of the power transistors Q1 through Q4 of the transistorized inverter circuit 115, whereby the motor is supplied with pulses of direct current. Since the processor 113a performs similar processing at a predetermined period to produce the current command ic, the motor 110 will eventually rotate at the commanded velocity.

Since the PWM circuit 114 has the aforementioned dead zone, the level "1" pulse width of the actual PWM signals SQ1 through SQ4 is reduced. Therefore, the current applied to the motor 110 is diminished correspondingly and the required torque cannot be obtained. Accordingly, a compensating method shown in Fig. 5 and relying upon voltage feedback has previously been proposed in the aforementioned EP—A—0085541. This previously proposed arrangement, as shown in Fig. 5, is provided with a voltage converting circuit 123 for generating an impressed voltage from an armature voltage Vc, a subtracting circuit 122 for calculating the difference between the output voltage of the holding circuit 118 and the output voltage of the voltage converting circuit 123, and an integrating circuit 121 for integrating the difference delivered by the subtracting circuit 122. Thus, a voltage feedback loop is constructed to raise the system gain and compensate for the dead zone of the PWM circuit 114. Numeral 124 denotes a voltage-current converter. With this arrangement, however, the circuits 121 through 123 are required. Since these circuits are analog circuits, moreover, the arrangement is complicated and high in cost despite the fact that circuitry is digitalized by use of the microprocessor. According to the present invention, therefore, the design is such that dead zone compensation is performed by processing internally of the arithmetic circuit 113, thereby dispensing with the circuits of the foregoing arrangement. Specifically, as shown in the view of Fig. 6 illustrating the principle of the present invention, within the arithmetic circuit 113 a compensating signal d is added to the current command ic calculated in the current command calculation step, and the result is delivered to the holding circuit 118. The compensating signal d is decided in the following manner:

$$\left.\begin{array}{l}\text{when } ic\geq 0 \text{ holds, } d=_{\Delta}\\ \text{when } ic<0 \text{ holds, } d=-_{\Delta}\end{array}\right\} \quad (2)$$

The dead zone $_{\Delta}$ of the PWM circuit 114 is known beforehand. Therefore, by adding the compensating signal d to the current command ic, compensation can be effected in such a manner that the current command ic does not fall in a range within the dead zone ($_{\Delta}$ through $-_{\Delta}$).

Thus, if the addition processing for the compensating signal d is provided, then the input/output characteristic of the PWM circuit 114 can be made into a linear characteristic which is free of a dead zone, as shown in Fig. 7.

This will now be described in connection with the embodiment of Fig. 1. The data memory 113c stores the value of d as $_{\Delta}$, $-_{\Delta}$. After executing the above-described current command step in accordance with the motor control program of the program memory 113b, the processor 113a discriminates the sign of the obtained current command ic, reads $_{\Delta}$ out of the data memory 113c if ic<0 holds or $-_{\Delta}$ if ic≥0 holds, and adds the read compensating signal d to the current command ic (dead zone compensation step).

The compensated current command is then fed into the holding circuit 118 through the input/output port 113e to control the motor 110.

Though the foregoing description is for a case where the motor is a DC motor and DC drive is applied, the invention is also applicable to a case where an AC motor is driven.

Fig. 8 is a block diagram of another embodiment of the present invention for a case where the invention is applied to a three-phase AC motor. In the Figure, numeral 110′ denotes a three-phase AC motor, and numeral 115′ designates an inverter (transistorized amplifier). The inverter is provided with power transistors Q1, Q2, Q3, Q4, Q5, Q6, in which two transistors are serially connected in each phase, and with diodes D1 through D6 for respective ones of the power transistors Q1 through Q6. Numeral 117 denotes a rectifying circuit the construction whereof is similar to that of Fig. 1. Numeral 114′ represents a PWM circuit which, as shown in Fig. 9, has subtracting circuits 114a, 114b, 114c for subtracting the triangular signal STS from current commands iu, iv, iw belonging to the respective phases and produced as outputs by the arithmetic circuit 113, comparators 114c, 114e, 114g for producing level "1" if the respective input signals thereof are $+_{\Delta}$ or greater and level "0" if their respective input signals are less than $+_{\Delta}$, and comparator circuits 114d, 114f, 114h for producing level "0" if the respective input signals thereof are $-_{\Delta}$ or greater and level "0" if their respective input signals are less than $-_{\Delta}$. The comparator circuits 114c through 114h produce PWM signals SQ1 through SQ6 for the power transistors Q1 through Q6. The PWM signals SQ1, SQ2; SQ3, SQ4; SQ5, SQ6 are of opposite phase, just as SQ1 and SQ2 in Fig. 3. Moreover, the pulse widths are diminished by the dead zones of the comparator circuits, as in Fig. 3. It should be noted that the holding circuit 118 is composed of three registers 118a, 118b, 118c so as to hold the current commands iu, iv, iw of the respective phases.

Before describing the operation of the embodiment shown in Fig. 8, the dead zone compensating principle of the present invention will be explained. If the star connection of the AC motor shown in Fig. 8 is considered upon being converted into a delta connection, then the arrangement will be as shown in Fig. 10, with dead zones 114A, 114B, 114C of the PWM circuit being inserted between adjoining phases so that a dead zone is produced near the zero point of the current commands for producing interphase voltages. If we let the R—S interphase voltage be $R_S$, the S—T interphase voltage be $S_T$, the T—R interphase voltage be $T_R$ and the voltages of the respective phases be $R_V$, $S_V$, $T_V$, then the following equations will hold:

$$\left.\begin{aligned} R_S&=R_V-S_V \\ S_T&=S_V-T_V \\ T_R&=T_V=R_V \end{aligned}\right\} \quad (3)$$

If the present invention is now applied, good results are obtained when compensating signals dRS, dST, dTR are added between phases, as shown in Fig. 11. The compensating signals are as follows:

$$\left.\begin{aligned} R_S\geq0\ldots d_{RS}=_\Delta,\ R_S<0\ldots d_{RS}=-_\Delta \\ S_T\geq0\ldots d_{ST}=_\Delta,\ S_T<0\ldots d_{ST}=-_\Delta \\ T_R\geq0\ldots d_{TR}=_\Delta,\ T_R<0\ldots d_{TR}=-_\Delta \end{aligned}\right\} \quad (4)$$

In actuality, the arithmetic circuit 113 commands the armature winding terminal voltages in the respective phases. Therefore, as shown in Fig. 12, the following compensating signals $d_R$, $d_S$, $d_T$ should be applied with respect to the current commands iu, iv, iw in the U(R), V(S), W(T) phases:

$$\left.\begin{aligned} d_R&=d_{RS}-d_{TR} \\ d_S&=d_{ST}-d_{RS} \\ d_T&=d_{TR}-d_{ST} \end{aligned}\right\} \quad (5)$$

The operation of the arrangement embodied in Fig. 8 will now be described. The processor 113a calculates the difference between the velocity command VCMD and the actual velocity TSA from the tachogenerator 111, calculates the velocity error ER in a manner similar to that described in connection with Fig. 1, then executes the abovementioned proportional integration step and calculates the amplitude Is. Next, the processor 113a reads sine wave and cosine wave patterns stored in the data memory 113c, multiplies these by the amplitude Is, generates two-phase AC signals I1a, I1b digitally, and performs the following calculations to generate three-phase current commands Iu, Iv, Iw:

$$\left.\begin{aligned} \dot{I}u&=\dot{I}1a \\ \dot{I}v&=-\frac{1}{2}\dot{I}1a+\frac{3}{2}\dot{I}1b \\ \dot{I}w&=-\frac{1}{2}\dot{I}1a-\frac{3}{2}\dot{I}1b \end{aligned}\right\} \quad (6)$$

As in the above-described current command calculation step, the processor 113a subtracts phase currents Iau, Iav, Iaw, which are read from current transformers 112U, 112V, 112W, from the obtained threephase current commands Iu, Iv, Iw, thereby to generate current commands iu, iv, iw.

Thereafter, the processor 113a determines, from the current commands iu, iv, iw, the signs of the interphase voltages $R_S$, $S_T$, $T_R$, reads, in dependence upon the determination, $d_{RS}$, $d_{ST}$, $d_{TR}$ stored in the data memory 113c, executes the calculations of Eq. (5) to generate the compensating signals $d_R$, $d_S$, $d_T$, and adds these to the current commands iu, iv, iw. The compensated current commands iu, iv, iw are fed into the holding circuits 118a, 118b, 118c through the bus 113h and input/output port 113e. Thus, the PWM circuit 114′ generates the PWM signals SQ1 through SQ6 to turn the power transistors Q1 through Q6 of the inverter 115′ on and off, whereby the AC motor 110′ is rotated at the commanded velocity.

According to the present invention as described above, for an arrangement having a PWM circuit including a dead zone, and an inverter (transistorized amplifier), an arithmetic circuit for generating a current command is adapted to add a compensating signal, which is capable of offsetting the dead zone of the PWM circuit, to the current command and to deliver the result to a holding circuit. Accordingly, an advantage is obtained wherein it is possible to prevent motor torque loss ascribable to the influence of the dead zone of the PWM circuit. In addition, in order to eliminate loss ascribable to the dead zone, no special analog circuitry is necessary. Instead, this can be performed by addition processing performed by the arithmetic circuit. Where the circuitry is digitalized through use of a microprocessor, therefore, the arrangement is simplified and costs can be reduced.

The input/output port 113e of Fig. 8 may consist of a counter, a three-phase AC signal in the form of a digital value delivered to the counter via the bus 113h, and the pulse-width modulated signal produced by the counter. In a case where pulse-width modulation is carried out, an arrangement may be adopted wherein a digital integrated circuit equipped with a clock oscillator is used in order to drive an up/down counter, and a programmable read-only memory responds to the up/down counter to generate a digital output signal proportional to a pulse-width modulated drive signal requested for a power stage, whereby a DC voltage is directly converted in digital fashion into an AC output waveform without using an AC reference waveform. Such an arrangement is disclosed in, e.g., Japanese Patent Application Laid-Open No. 53—48449. In such case, the pulse-width modulated signal is applied to the base drive circuit, in response to which signal the inverter can be controlled. It should be noted that the present invention is not limited to the above-described embodiments but can be modified in various ways in accordance with the gist thereof, and that such modifications will not depart from the scope of the claim.

According to the present invention, the dead zone of a PWM circuit provided in order to prevent a short circuit in an inverter circuit is offset, whereby loss of motor torque due to the influence of the dead zone can be reduced or prevented. The invention therefore is well-suited for application to the field of motor control.

**Claims**

1. A motor control apparatus having an arithmetic circuit (113) for calculating a current command (ic or iu, iv, iw), a holding circuit (118) for holding said current command, a pulse-width modulating circuit (114 or 114') for pulse-width modulating an output signal from said holding circuit (118) and provided with a dead zone with respect to said output signal, and an inverter (115 or 115') for controlling a motor (110 or 110') by said pulse-width modulated signal, wherein said arithmetic circuit (113) has means for adding a compensating signal (d or dr, ds, dt), which compensates for loss due to said dead zone, to said current command (ic or iu, iv, iw) and for delivering the result to said holding circuit (118), said arithmetic circuit including a data memory (113c) storing a value of said compensating signal as a value dependent on the dead zone.

2. A motor control apparatus according to claim 1, wherein said inverter is a transistorized inverter.

**Patentansprüche**

1. Motorkontrolleinheit, die eine arithmetische Schaltung (113) zum Berechnen eines Strombefehlssignals (ic oder iu, iv, iw), eine Halteschaltung (118) zum Halten des Strombefehlssignals, eine Pulsbreitenmodulationsschaltung (114 oder 114'), die zum Pulsbreitenmodulieren eines Ausgangssignals aus der Halteschaltung (118) vorgesehen ist und einen Totbereich in bezug auf das Ausgangssignal aufweist, und einen Wechselrichter (115 oder 115') zum Steuern eines Motors (110 oder 110') durch das pulsbreitenmodulierte Signal hat, wobei die arithmetische Schaltung (113) Mittel zum Addieren eines Kompensationssignals (d oder dr, ds, dt), welches einen Verlust aufgrund des Totbereichs kompensiert, zu dem Strombefehlssignals (ic oder iu, iv, iw) und zum Ausgeben des Ergebnisses an die Halteschaltung (118) aufweist und wobei die arithmetische Schaltung einen Datenspeicher (113c) enthält, der den Wert des Kompensationssignals als einen von dem Totbereich abhängigen Wert speichert.

2. Motorkontrolleinheit nach Anspruch 1, bei der der Wechselrichter ein transistorisierter Wechselrichter ist.

**Revendications**

1. Appareil de commande de moteur, comprenant un circuit arithmétique (113), pour calculer une commande de courant (ic ou iu, iv, iw), un circuit de maintien (118) pour maintenir ladite commande de courant, un circuit modulateur par impulsions de largeur variable (114 ou 114') pour moduler, par impulsions de largeur variable, un signal de sortie du circuit de maintien (118) et comprenant une zone morte par rapport audit signal de sortie, et un onduleur (115 ou 115') pour commander un moteur (110 ou 110') par ledit signal modulé par impulsions de largeur variable, dans lequel ledit circuit arithmétique (113) comprend des moyens pour ajouter un signal de compensation (d ou dr, ds, dt) qui compense les pertes dûes à ladite zone morte, à ladite commande de courant (ic ou iu, iv, iw) et pour délivrer le résultat audit circuit de maintien (118), ledit circuit arithmétique comprenant une mémoire de données (113c) stockant une valeur dudit signal compensateur sous forme d'une valeur fonction de la zone morte.

2. Appareil de commande de moteur, selon la revendication 1, dans lequel ledit onduleur est un onduleur à transistors.

Fig. 1

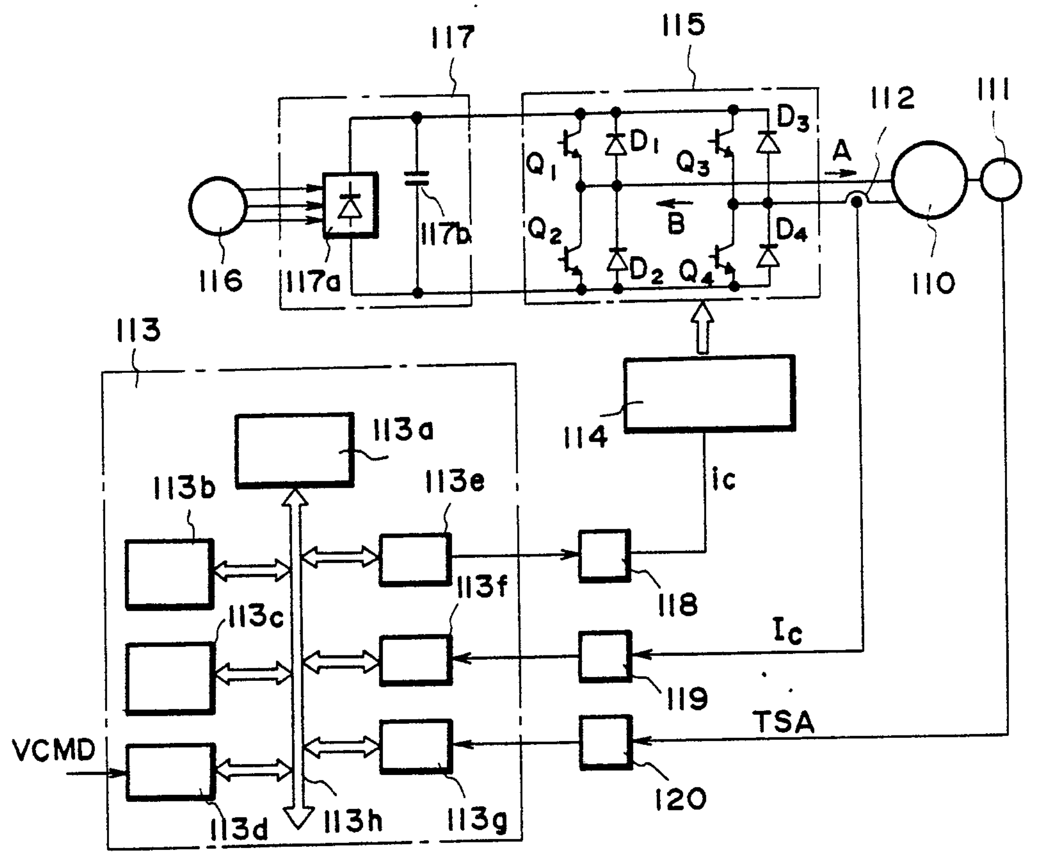


Fig. 2

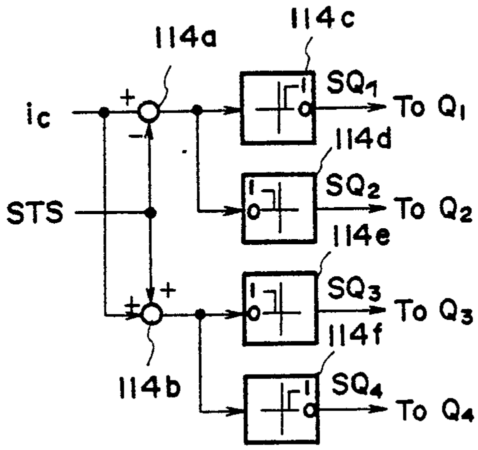


Fig. 3

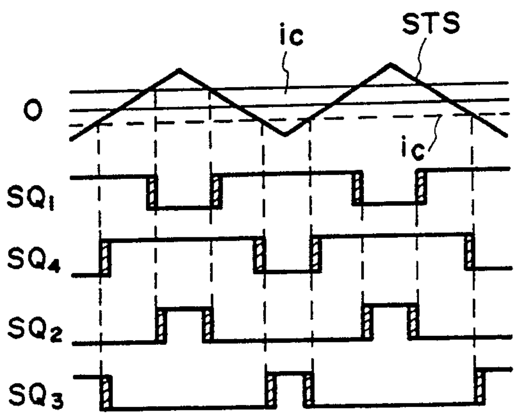

Fig. 4

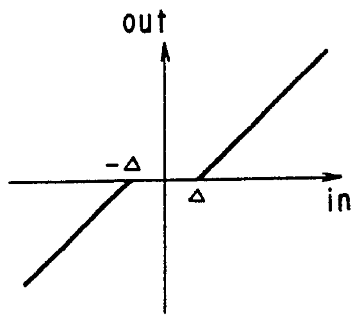


Fig. 7

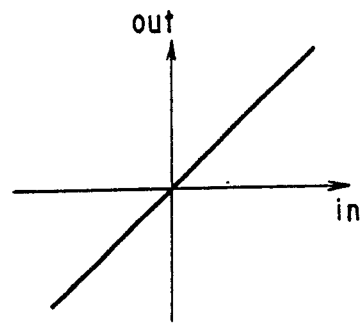


Fig. 5

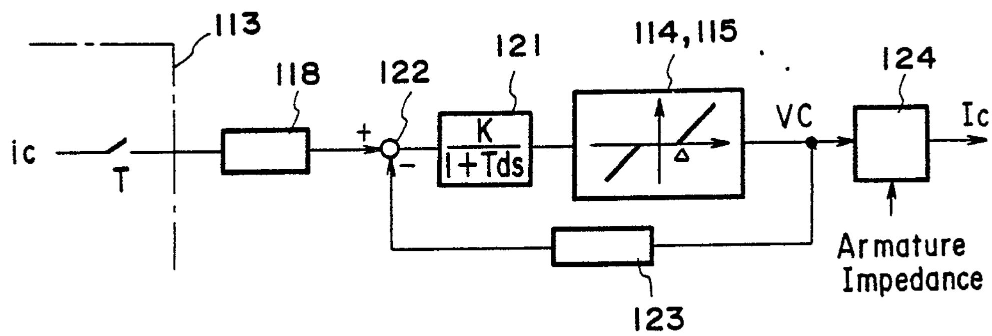


Fig. 6

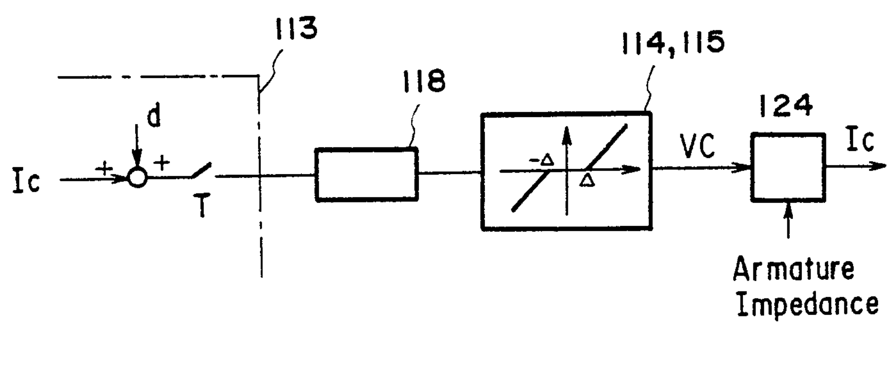

Fig. 8

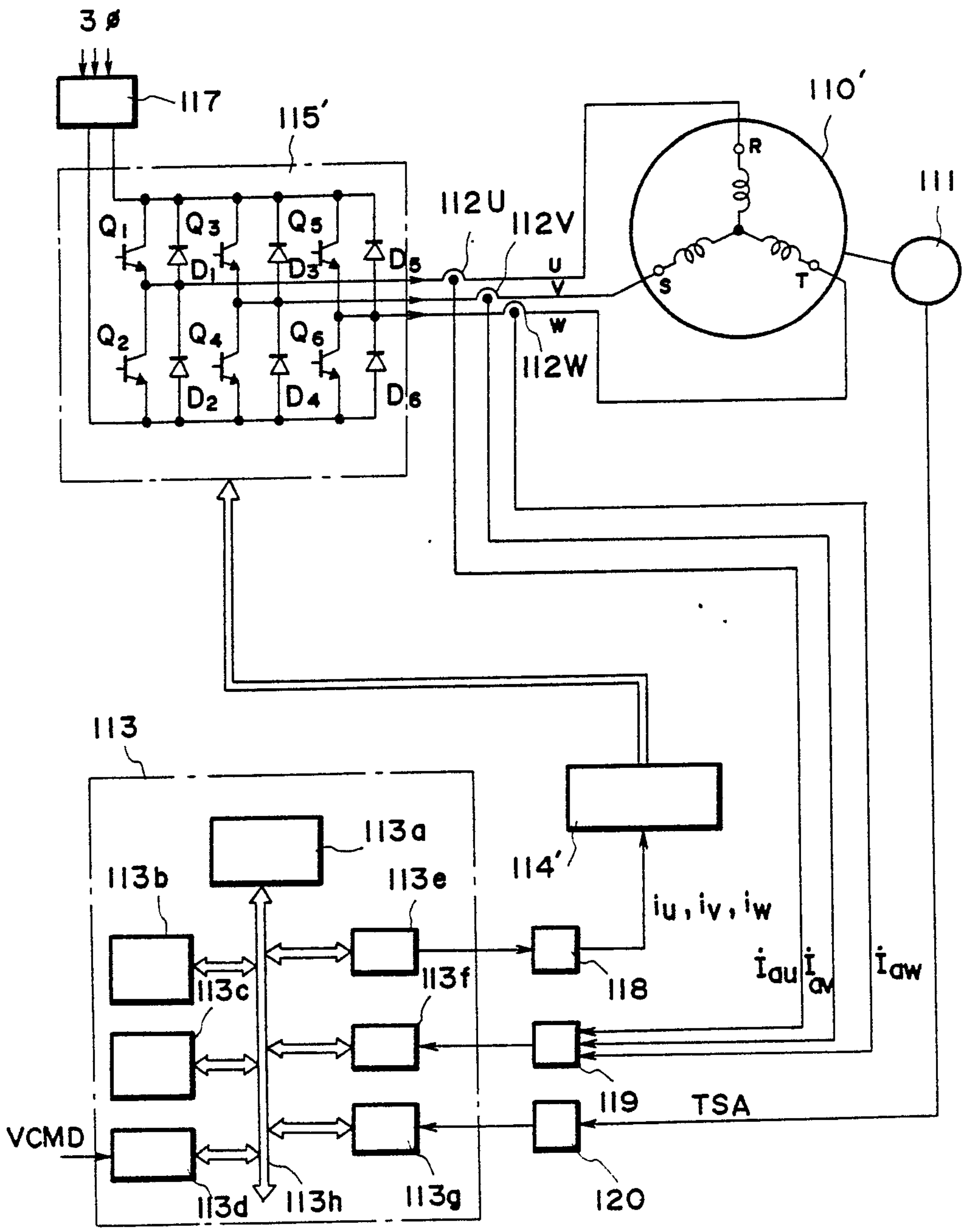
3ø
117
115'
110'
111
Q1
Q3
Q5
D1
D3
D5
Q2
Q4
Q6
D2
D4
D6
112U
112V
112W
R
S
T
U
V
W
113
113a
113b
113c
113d
113e
113f
113g
113h
114'
118
119
120
iu, iv, iw
Iau
Iav
Iaw
TSA
VCMD

Fig. 10

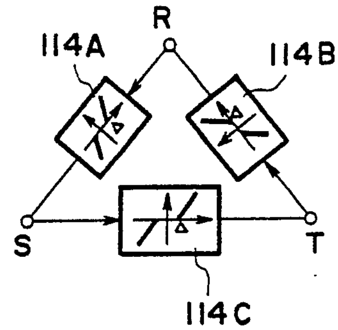


Fig. 9

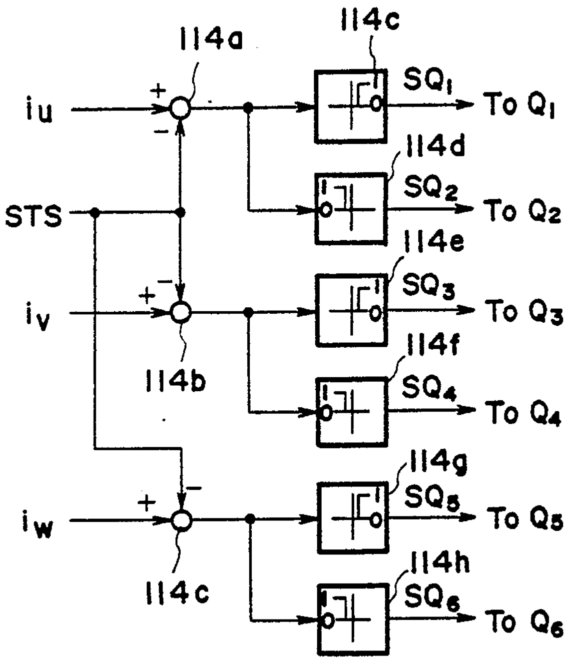


Fig. 11

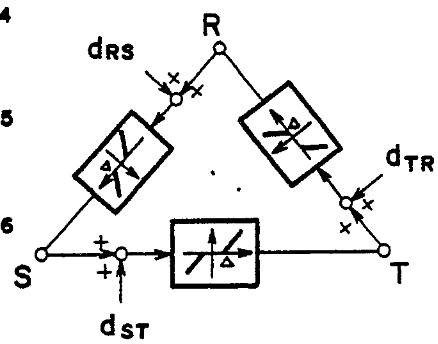


Fig. 12